# EUROPEAN PATENT SPECIFICATION

(11) **EP 2 118 954 B1**
(45) Date of publication and mention of the grant of the patent: **13.07.2011**
(21) Application number: 07858006.5
(22) Date of filing: 20.12.2007
(51) Int. Cl.: H01M 10/54, C22B 13/02

(54) **DEVICE AND METHOD FOR PROCESSING UNCRUSHED LEAD STORAGE BATTERIES AT AN IMPROVED RATE**
EINRICHTUNG UND VERFAHREN ZUM VERARBEITEN VON NICHTMEHL-BLEIBATTERIEN MIT VERBESSERTER GESCHWINDIGKEIT
DISPOSITIF ET PROCÉDÉ POUR TRAITER DES BATTERIES DE STOCKAGE DE PLOMB NON ÉCRASÉES À UN DÉBIT AMÉLIORÉ

(30) Priority: 22.12.2006 FR 0611312
(43) Date of publication of application: 18.11.2009
(73) Proprietor: Recylex S.A., 75008 Paris (FR)
(72) Inventor: HUCHARD, Jean-François, 01600 Parcieux (FR)
(74) Representative: Tetaz, Franck Claude Edouard
(86) International application number: PCT/EP2007/064387
(87) International publication number: WO 2008/077905

(56) References cited:
- WO-A-92/14797
- WO-A-2007/026322
- WO-A-2007/129845
- FR-A1- 2 123 508
- GB-A- 2 075 248
- US-A- 3 561 684
- US-A- 4 310 351
- US-A- 4 384 683

## Description

This invention relates to the general technical field of the processing of lead storage batteries of the lead-acid battery type.

The invention advantageously but non-limitatively finds application in the field of the recycling of spent lead-acid batteries.

### General presentation of the prior art

Devices and methods for making it possible to process lead storage batteries have already been proposed.

The document FR 39 762, published in 1966, describes a method and a device for processing lead storage batteries.

The method includes a step consisting in breaking the storage batteries by dropping them from a height of between 3 and 4 metres, by means of a crane.

The method next includes a step for crushing the storage batteries in a first impact crusher.

The debris coming from the crushing process is screened in a rotary screen with mesh equal to 80 millimetres. This screening process makes it possible to segregate the separators from the other constituents of the storage battery.

The debris having dimensions larger than 80 millimetres (separators) are crushed in a second crusher and screened in a rotary screen having a mesh equal to 80 millimetres. This second crushing process has the purpose of permanently ridding the separators from the remainder of the lead which adheres to them.

This method is particularly suited to processing batteries made of ebonite or bakelite, material used for manufacturing batteries in the 1960's.

However, this method was tendered obsolete by the arrival of storage batteries made of polypropylene in the 1970's. As a matter of fact, polypropylene is a much less brittle material than ebonite or bakelite, which made the steps of this method, and particularly the step consisting in breaking the storage batteries by dropping them from a height of 3 to 4 metres, unsuitable for new batteries.

In the 1990's, processing standards further required lead storage batteries to be processed in their electrolyte-filled condition, i.e., in their spent state, without any particular pre-processing aiming to empty the storage batteries of their electrolyte.

A multitude of processing methods were then proposed, generally including a step for fine-crushing the storage batteries, for screening the crushed debris in order to separate the debris having dimensions smaller than 80 millimetres from that having larger dimensions, and a separation step for separating from each other :
- lead and acid oxides and sulphates,
- metal,
- polypropylene, and
- other plastics.

These methods propose processing at a rate of the order of 10 to 20 tons of storage batteries per hour.

Document US 3 561 684 discloses an apparatus for segregating the components of lead storage batteries. The lead storage batteries are pre-processed prior to being introduced into the apparatus of US 3561 684. The preprocessing consists in breaking the lead storage batteries by repetively picking up and dropping them.

Document US4 384 683 discloses a method of recovering lead and lead compounds from scrapped storage batteries comprising coarse and fine crushing of lead storage batteries

Document US 4 310 351 discloses a method wherein scrap lead storage batteries are mechanically treated and screened.

One purpose of the invention is to propose a method and a device for processing lead storage batteries making it possible to improve productivity.

Another purpose of the invention is to propose a method and a device that are simpler and more cost-effective than the methods of the prior art.

### Disclosure of the invention

To that effect, a device is anticipated for processing uncrushed lead storage batteries including, in combination :
- a primary crusher for coarsely crushing the batteries,
- a rotary screener for screening the debris from crushing, the screener having a mesh of between 10 and 20 millimetres so as to separate the coarse debris from the fine substances including lead oxides (PbO2, PbSO4), the screener being arranged downstream from the primary crusher,
- a secondary crusher for finely crushing the coarse debris so as to obtain fine fragments, the secondary crusher being arranged downstream from the screener.

Within the scope of this invention, "coarse crushing" is understood to mean crushing in which the debris obtained at the output has dimensions of between 0 and 150 millimetres.

Within the scope of this invention, fine crushing is understood to mean crushing in which the debris obtained at the output of the crushing operation has dimensions of between 0 and 40 millimetres.

Within the scope of this invention, "mesh" is understood to mean a number indicative of the net size of the openings in the screen, and which can correspond to the diameter of the openings (in the case of a circular opening) or to the length of the openings (in the case of openings that are square, rectangular or of any other shape).

Within the scope of this invention, "coarse debris" is understood to mean debris having dimensions larger than the screen mesh.

Within the scope of this invention, "fine substance" is understood to mean debris having dimensions smaller than the screen mesh.

Preferred but non-limiting aspects of the device according to the invention are as follows :
- preferably, the mesh of the rotary screen is between 12 and 17 millimetres, and even more preferably of the order of 15 millimetres ;
- the primary crusher is a beater crusher ;
- the secondary crusher is a hammer crusher ;
- the primary crusher is designed so as to crush the storage batteries into debris having dimensions smaller than or equal to substantially 150 millimetres ;
- the secondary crusher is designed so as to produce fine fragments having dimensions smaller than or equal to substantially 40 millimetres at the output of the secondary crusher ;

According to an alternative embodiment, the device also includes a drag-bar feeder upstream from the primary crusher. In this case, the device can also include a conveyor belt arranged between the drag-bar feeder and the primary crusher, the conveyor including at least one cleaning scraper for cleaning the conveyor belt and means for recovering the debris coming from the cleaning scraper.

According to another alternative embodiment, the device includes a dynamic separator arranged downstream from the secondary crusher. In this case, the device can also include a washer worm arranged between the secondary crusher and the dynamic separator.

Finally, the device can also include a static separator downstream from the dynamic separator.

The invention also relates to a method for processing uncrushed lead storage batteries including the following steps :
- coarse crushing of the storage batteries by means of a primary crusher,
- screening of the debris from crushing by means of a rotary screener arranged downstream from the primary crusher, the screener having a mesh of between 10 and 20 millimetres so as to separate the coarse debris from the fine substances including lead oxides (PbO2, PbSO4),
- fine crushing of the coarse debris by means of a secondary crusher arranged downstream from the screener, in order to obtain fine fragments.

Preferred but non-limiting aspects of the method according to the invention are as follows :
- the mesh of the rotary screen used in the screening step is preferably between 12 and 17 millimetres, and even more preferably equal to 15 millimetres ;
- the coarse crushing of the storage batteries can be carried out by means of a primary beater crusher ;
- the fine crushing of the coarse debris can be carried out by means of a secondary hammer crusher ;
- the primary crusher can be designed so as to crush the storage batteries into debris having dimensions smaller than or equal to substantially 150 millimetres ;
- the secondary crusher can be designed to as to produce fine fragments having dimensions smaller than or equal to substantially 40 millimetres at the output of the secondary crusher ;
- the method can further include a step for washing the fine fragments (coming from the fine crushing step) by means of a washer worm arranged downstream from the secondary crusher ;
- the method can further include a step for separating the metallic materials and the plastic materials by means of a dynamic separator ;
- the method can further include a step for separating the polypropylene plastic materials and the non-recyclable plastic materials other than polypropylene.

### Presentation of the figures

Other characteristics, objectives and advantages of this invention will also emerge from the following description, which is purely illustrative and non-limiting and which must be read with regard to the appended drawings in which :
- figure 1 is a schematic representation of an embodiment of the device according to the invention,
- figure 2 shows an embodiment of the method according to the invention.

### Description of the invention

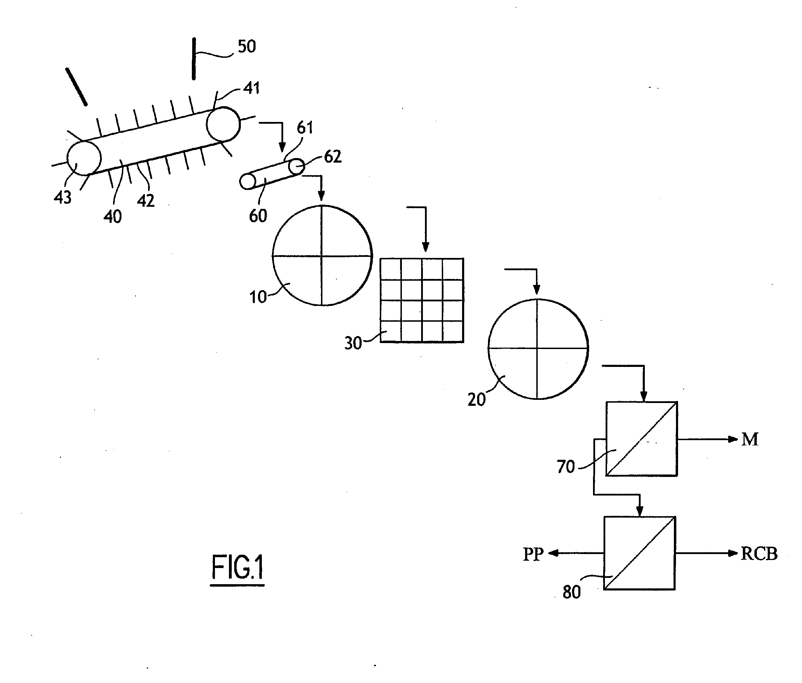

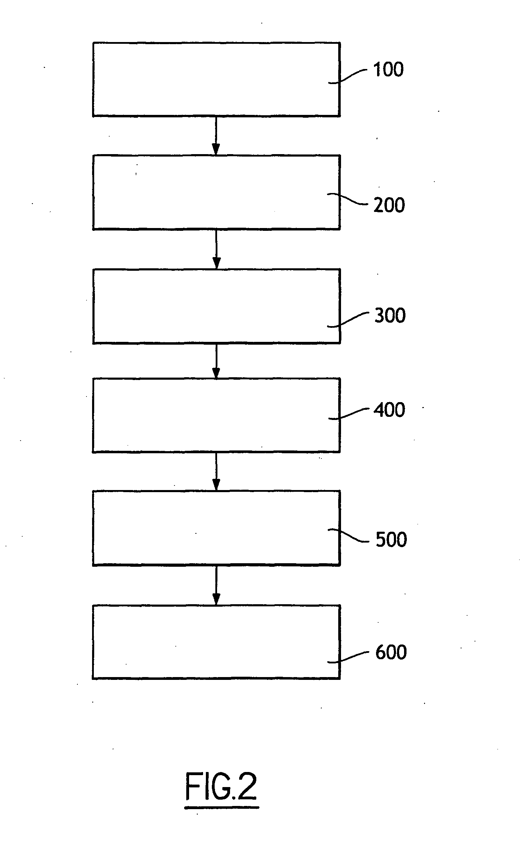

The device and method for processing uncrushed lead storage batteries according to the invention will now be described in reference to figures 1 and 2.

In reference to figure 1, the device according to the invention includes :
- a primary crusher 10,
- a secondary crusher 20 and,
- a rotary screen 30 arranged between the primary crusher 10 and the secondary crusher 20.

The primary crusher 10, for example, is a beater crusher. In the embodiment shown in figure 1, the primary crusher 10 includes 4 stationary beaters and 2 movable impact plates on which the storage batteries are crushed into crushing debris.

In certain embodiments, the primary crusher 10 can be designed so as to produce crushing debris having dimensions smaller than 150 millimetres. For example, in an alternative embodiment, the primary crusher 10 includes a screening surface having a mesh equal to 150 millimetres at the output of the primary crusher. Thus, only the debris having dimensions smaller than 150 millimetres exits from the primary crusher 10.

The secondary crusher 20 is a hammer crusher. In the embodiment shown in figure 1, the secondary crusher 20 includes 26 hammers hinged to a rotor.

In certain embodiments, the secondary crusher 20 can be designed so as produce crushing debris having dimensions smaller than 40 millimetres. For example, by using a mesh equal to 40 millimetres at the output of the secondary crusher 20, whereby only the debris having dimensions smaller than or equal to 40 millimetres exits from the secondary crusher 20.

Of course, those skilled in the art know that other parameters can be considered for obtaining crushing debris having dimensions smaller than 40 millimetres. For example, the distance between the hinged hammers and the grid, or the shape and the dimensions of the crusher 20 enclosure containing the hammers can be taken into account, and in particular in order to improve the performance of the crusher.

Thus, the primary and secondary crushers are designed differently. The primary crusher is designed for crushing large dimension storage batteries in order to reduce them to debris having dimensions smaller than or equal to 150 millimetres. The secondary crusher is designed for crushing debris having dimensions smaller than or equal to 150 millimetres into fine fragments having dimensions smaller than or equal to 40 millimetres.

Owing to the combination of a primary crusher 10 for coarsely crushing storage batteries and a secondary crusher 20 for finely crushing the debris, the device according to the invention is capable of processing any type of lead-acid storage battery, without carrying out any pre-processing, and does so irrespective of its size (lorry battery, starter battery, etc.).

The rotary screen 30 makes it possible to sort the crushing debris coming from the primary crusher 10 according to its size. The rotary screen 30 has a mesh of between 10 and 20 millimetres, preferably between 12 and 17 millimetres, and even more preferably of the order of 15 millimetres.

In the example shown in figure 1, the screen 30 consists of a cylindrical screening surface rotating about an inclined axis. Alternatively, the screening surface of the rotary screen 30 can be of any other shape and/or have a horizontal axis of rotation.

The screening surface is provided with circular openings having a diameter substantially equal to 15 millimetres, so that the rotary screen 30 makes it possible to separate the debris having dimensions smaller than or equal to 15 millimetres from the debris having dimensions larger than 15 millimetres. Alternatively, the openings of the screening surface can be of another shape (square, rectangular, hexagonal, etc.).

The combination of the primary crusher, the rotary screen and the secondary crusher described above makes it possible to increase the productivity of the device, as will be described later in greater detail, in reference to the method implemented by the device according to the invention.

The device shown in figure 1 also includes a hopper 50 in which the storage batteries to be processed are arranged, and a drag-bar feeder 40.

The drag-bar feeder 40 includes scrapers 41. Each scraper 41 consists of a rectangular metal plate. The ends of each scraper are fastened to endless chains 42 which are wound around two drums 43 arranged at the ends of the housing 50.

Chain 42 and scrapers 41 are embedded in the material (storage batteries) and drag it onto the flat bottom of the hopper.

The drag-bar feeder 40 makes it possible to feed the primary crusher 10 continuously and at a steady rate, by means of a conveyor 60.

The conveyor 60, for example, consists of a belt 61 arranged between two rotating drums 62.

The conveyor 60 can advantageously include means (now shown) for removing the debris attached to the belt 61, so as to clean the surface of the belt 61.

As a matter of fact, at a rate of 50 tons per hour, failure to clean the belt 61 of the conveyor 60 can result in a significant agglomeration of debris on the surface thereof.

The means for clearing away the debris can include scrapers (or rectangular plates) arranged beneath the conveyor 60 and in contact with the surface of the belt 61, so as to detach the debris by scraping.

The device can also include a chute (not shown) including a screw conveyor.

This chute is arranged beneath the conveyor 60 in order to recover the debris detached by the clearing means.

The screw conveyor enables transport of the debris recovered in the chute towards the intake of the primary crusher 10 (or the output of the primary crusher, depending on the embodiment of the device).

Finally, in the embodiment shown in figure 1, the device includes dynamic 70 and static 80 separators.

The dynamic separator 70 is arranged downstream from the secondary crusher 20 and makes it possible to sort the fine fragments by separating the metallic materials and the plastic materials.

The dynamic separator 70, for example, is a screw conveyor separator.

The static separator 80 is arranged downstream from the dynamic separator 70 and makes it possible to sort the plastic materials by separating the polypropylene plastic materials from the other non-recyclable plastic materials hereinafter called BCW (Battery Crushing Waste).

The static separator 80, for example, includes a tank filled with water using gravity to separate the polypropylene plastic materials from the BCW.

As a matter of fact, the density of polypropylene is lower than that of water, contrary to the BCW, so that the polypropylene plastic materials float whereas the BCW flows to the bottom of the container. This makes it possible to easily separate the polypropylene materials from the BCW.

The operating principle of the device described above is as follows.

The spent storage batteries are arranged in the hopper 50.

The drag-bar feeder 40 arranged at the bottom of the housing 50 drags the spent storage batteries along so as to feed the conveyor 60 at a steady rate of 50 tons per hour.

The conveyor 60 transports the spent storage batteries as far as the primary crusher 10 arranged at the end of the conveyor 60.

The scrapers detach the debris attached to the surface of the conveyor belt 60.

The debris detached by scraping falls into the chute and is dragged along by the screw conveyor towards the intake of the primary crusher 10. In this way, material losses are limited.

The primary crusher 10 coarsely crushes the storage batteries so as to obtain debris having dimensions of between 0 and 150 millimetres.

The debris obtained at the output of the primary crusher 10 is brought to the rotary screen 30 which sorts it according to its size.

The fine substances having dimensions smaller than 15 millimetres are separated from the coarse debris having dimensions of between 15 and 150 millimetres.

The fine substances, which are primarily composed of oxides and acids contained in the storage batteries, are next processed by a drying process (or "dewatering") known to those skilled in the art.

The coarse debris is brought to the secondary crusher 20 which crushes it finely so as to obtain fine fragments having dimensions smaller than or equal to 40 millimetres.

Exiting the secondary crusher 20, the fine fragments are brought into the dynamic separator 70 which separates the metallic materials from the plastic materials.

The plastic materials are brought into the static separator 80, which enables separation of the polypropylene PP plastic materials from the other plastic materials BCW.

One example of practising the invention will now be described in reference to the method shown in figure 2.

The device is fed (step 100) with storage batteries at a rate of 50 tons of storage batteries per hour.

The method includes a step 200 for coarse crushing of the storage batteries by means of the primary crusher 10, in order to obtain coarse crushing debris.

After the step for coarse crushing 200 of the storage batteries, the method includes a step for screening 300 the crushing debris by means of a rotary screener 30 arranged downstream from the primary crusher 10.

This combination of the coarse crushing step 200 and the screening step 300 makes it possible to separate the coarse debris (having dimensions of between 15 and 150 millimetres) from the fine substances (having dimensions of between 0 and 15 millimetres).

The fine substances account for approximately 62% of the storage batteries. Thus, for 50 tons of processed storage batteries, the amount of fine substance accounts for approximately 31 tons, and the coarse debris 14 tons.

Thus, at the output of the primary crusher 10, the combination of these two steps 200, 300 makes it possible to eliminate 62% of the mass of storage batteries being processed.

In another step 400 of the method, the coarse debris is finely crushed by the secondary crusher 20.

In the example, it has been seen that the coarse debris amounts to 14 tons for 50 tons of storage batteries.

The secondary crusher 20 is of a type known to those skilled in the art. This type of crusher is capable of crushing storage batteries at a maximum rate equal to approximately 20 tons per hour.

It is this type of crusher that is commonly used for recycling batteries. This explains why the existing recycling methods are limited to rates of the order of 20 tons per hour.

Owing to the coarse crushing 200 and screening 300 steps preceding the fine crushing step 400, the invention makes it possible to improve the productivity of the existing methods.

Fine fragments having dimensions of between 0 and 40 millimetres are obtained at the output of the fine crushing step 400.

Optionally, the device can include a step for washing 500 the fine fragments by using a washer worm (arranged between the secondary crusher 20 and the dynamic separator 70).

This washing step 500 makes it possible to detach the lead adhering to the plastic and metallic materials, so as to obtain purer sorted products (i.e., very clean plastic and metallic materials having a low percentage of impurities and thus easily recyclable).

In another step 600, the fine fragments are sorted by dynamic 70 and static 80 separators.

Each step makes it possible to separate :
- the metallic materials,
- the polypropylene plastic materials and
- the plastic materials other than polypropylene.

The metallic materials account for approximately 20% of the mass of storage batteries, i.e., a total of 10 tons for 50 tons of processed storage batteries.

Polypropylene plastic materials account for approximately 4% of the mass of processed storage batteries. Thus, a quantity of 2 tons of polypropylene plastic materials for 50 tons of processed storage batteries is obtained at the output of the sorting step.

The same applies to plastic materials other than polypropylene, which also account for approximately 4% of the mass of processed storage batteries.

### References

- 100: Extraction and conveying of the electrolyte-filled spent storage batteries
- 200: Coarse crushing of the storage batteries by means of a primary crusher in order to obtain coarse crushing debris
- 300: Screening of the crushing debris by means of a rotary screener arranged downstream from the primary crusher
- 400: Fine crushing of the coarse debris by means of a secondary crusher arranged downstream from the screener, in order to obtain fine fragments
- 500: Washing of the fine fragments (coming from the fine crushing step) by means of a washer worm arranged downstream from the secondary crusher
- 600: Sorting of the fine fragments

### CAPTIONS

| | |
|---|---|
| Figure 1 | |
| RCB | BCW |

## Claims

1. Device for processing uncrushed lead storage batteries including, in combination:
- a primary crusher (10) for coarsely crushing the batteries,
- a rotary screener (30) for screening the debris from crushing, the screener having a mesh of between 10 and 20 millimetres so as to separate the coarse debris from the fine substances including lead oxides (Pb02, PbSO4), the screener being arranged downstream from the primary crusher,
- a secondary crusher (20) for finely crushing the coarse debris so as to obtain fine fragments, the secondary crusher being arranged downstream from the screener.

2. Device of claim 1, **characterised in that** the mesh of the rotary screen (30) is preferably between 12 and 17 millimetres, and even more preferably of the order of 15 millimetres.

3. Device as claimed in one of claims 1 or 2, **characterised in that** the primary crusher (10) is a beater crusher.

4. Device as claimed in one of claims 1 to 3, **characterised in that** the secondary crusher (20) is a hammer crusher.

5. Device as claimed in one of claims 1 to 4, **characterised in that** the primary crusher (10) is designed so as to crush the storage batteries into debris having dimensions smaller than or equal to substantially 150 millimetres.

6. Device as claimed in one of claims 1 to 5, **characterised in that** the secondary crusher (20) is designed to as to produce fine fragments having dimensions smaller than or equal to substantially 40 millimetres at the output of the secondary crusher (20).

7. Device as claimed in one of claims 1 to 6, **characterised in that** it also includes a drag-bar feeder (40) upstream from the primary crusher (10).

8. Device of claim 7, **characterised in that** it further includes a conveyor belt (60) arranged between the drag-bar feeder and the primary crusher, the conveyor (60) including at least one belt-cleaning scraper for cleaning the belt of the conveyor and means for recovering the debris detached by the cleaning scraper.

9. Device as claimed in one of claims 1 to 8, **characterised in that** it further includes a dynamic separator (70) arranged downstream from the secondary crusher (20).

10. Device of claim 9, **characterised in that** it further includes a static separator (80) arranged downstream from the dynamic separator (70).

11. Device as claimed in one of claims 9 or 10, **characterised in that** it further includes a washer worm arranged between the secondary crusher (20) and the dynamic separator (70).

12. Method for processing uncrushed lead storage batteries, **characterised in that** it includes, in combination:
- coarse crushing (200) of the storage batteries by means of a primary crusher (10),
- screening (300) of the crushing debris by means of a rotary screener (30) arranged downstream from the primary crusher (10), the screener (30) having a mesh of between 10 and 20 millimetres, so as to separate the coarse debris from the fine substances including lead oxides (PbO2, PbSO4),
- fine crushing (400) of the coarse debris by means of a secondary crusher (20) arranged downstream from the screener (30), in order to obtain fine fragments.

## Patentansprüche

1. Vorrichtung zum Bearbeiten von unzerkleinerten Bleiakkumulatorbatterien, umfassend in Kombination:
- einen primären Zerkleinerer (10) zum groben Zerkleinern der Batterien,
ein sich drehendes Sieb (30) zum Sieben der von der Zerkleinerung resultierenden Bruchstücke, wobei das Sieb eine Siebweite zwischen 10 und 20 Millimeter besitzt, um so die groben Bruchstücke von den kleineren Substanzen, die Bleioxide umfassen (Pb02, PbS04), zu trennen, und wobei das Sieb stromabwärts von dem primären Zerkleinerer angeordnet ist,
- einen sekundären Zerkleinerer (20) zum feinen Zerkleinern der groben Bruchstücke, um so feine Fragmente zu erhalten, wobei der sekundäre Zerkleinerer stromabwärts von dem Sieb angeordnet ist.

2. Vorrichtung nach Anspruch 1, **dadurch gekennzeichnet, dass** die Siebweite des sich drehenden Siebs (30) vorzugsweise zwischen 12 und 17 Millimeter, und noch bevorzugter in der Größenordnung von 15 Millimeter liegt.

3. Vorrichtung nach Anspruch 1 oder 2, **dadurch gekennzeichnet, dass** der primäre Zerkleinerer (10) ein Schlagzerkleinerer ist.

4. Vorrichtung nach einem der Ansprüche 1 bis 3, **dadurch gekennzeichnet, dass** der sekundäre Zerkleinerer (20) ein Hammerzerkleinerer ist.

5. Vorrichtung nach einem der Ansprüche 1 bis 4, **dadurch gekennzeichnet, dass** der primäre Zerkleinerer (10) so ausgestaltet ist, dass er die Akkumulatorbatterien in Bruchstücke zerkleinert, die Abmessungen besitzen, welche im Wesentlichen kleiner oder gleich 150 Millimeter sind.

6. Vorrichtung nach einem der Ansprüche 1 bis 5, **dadurch gekennzeichnet, dass** der sekundäre Zerkleinerer (20) so ausgestaltet ist, dass er feine Fragmente an dem Ausgang des sekundären Zerkleinerers (20) erzeugt, die Abmessungen besitzen, welche im Wesentlichen kleiner oder gleich 40 Millimeter sind.

7. Vorrichtung nach einem der Ansprüche 1 bis 6, **dadurch gekennzeichnet, dass** er ebenso einen Zugstangenbeschicker (40) stromaufwärts von dem primären Zerkleinerer (10) umfasst.

8. Vorrichtung nach Anspruch 7, **dadurch gekennzeichnet, dass** sie des Weiteren ein Förderband (60) umfasst, das zwischen dem Zugstangenbeschicker und dem primären Zerkleinerer angeordnet ist, wobei der Förderer (60) zumindest einen Bandreinigungskratzer zum Reinigen des Bandes des Förderers und Mittel zum Wiederaufnehmen derjenigen Bruchstücke, die sich von dem Reinigungskratzer gelöst haben, umfasst.

9. Vorrichtung nach einem der Ansprüche 1 bis 8, **dadurch gekennzeichnet, dass** sie des Weiteren einen dynamischen Separator (70) umfasst, der stromabwärts von dem sekundären Zerkleinerer (20) angeordnet ist.

10. Vorrichtung nach Anspruch 9, **dadurch gekennzeichnet, dass** sie des Weiteren einen statischen Separator (80) umfasst, der stromabwärts von dem dynamischen Separator (70) angeordnet ist.

11. Vorrichtung nach einem der Ansprüche 9 oder 10, **dadurch gekennzeichnet, dass** sie des Weiteren eine Scheibenschnecke umfasst, die zwischen dem sekundären Zerkleinerer (20) und dem dynamischen Separator (70) angeordnet ist.

12. Verfahren zum Bearbeiten von unzerkleinerten Bleiakkumulatorbatterien, **dadurch gekennzeichnet, dass** es in Kombination umfasst:
- grobes Zerkleinern (200) der Akkumulatorbatterien mit Hilfe eines primären Zerkleinerers (10),
- Sieben (300) der zerkleinerten Bruchstücke mit Hilfe eines sich drehendes Siebes (30), das stromabwärts von dem primären Zerkleinerer (10) angeordnet ist, wobei das Sieb (30) eine Siebweite zwischen 10 und 20 Millimeter besitzt, um so die groben Bruchstücke von den feinen Substanzen, die Bleioxide (Pb02, PbS04) umfassen, zu trennen,
- feines Zerkleinern (400) der groben Bruchstücke mit Hilfe eines sekundären Zerkleinerers (20), der stromabwärts von dem Sieb (30) angeordnet ist, um feine Fragmente zu erhalten.

## Revendications

1. Dispositif pour traiter des accumulateurs au plomb non concassés incluant, en combinaison :
- un broyeur principal (10) pour broyer grossièrement les accumulateurs,
- un tamiseur rotatif (30) pour tamiser les débris issus du broyage, le tamis ayant une maille comprise entre 10 et 20 millimètres de façon à séparer les débris grossiers des substances fines incluant les oxydes de plomb (PbSO₂, PbSO₄), le tamis étant agencé en aval du broyeur principal,
- un broyeur secondaire (20) pour broyer finement les débris grossiers de façon à obtenir des fragments fins, le broyeur secondaire étant agencé en aval du tamiseur.

2. Dispositif selon la revendication 1, **caractérisé en ce que** la maille du tamis rotatif (30) est de préférence comprise entre 12 et 17 mm, et même de préférence de l'ordre de 15 millimètres.

3. Dispositif selon l'une des revendications 1 et 2, **caractérisé en ce que** le broyeur principal (10) est un broyeur à battre.

4. Dispositif selon l'une des revendications 1 à 3, **caractérisé en ce que** le broyeur secondaire est un broyeur à marteaux.

5. Dispositif selon l'une des revendications 1 à 4, **caractérisé en ce que** le broyeur principal (10) est conçu de façon à broyer les accumulateurs en débris ayant des dimensions inférieures ou égales à environ 150 millimètres.

6. Dispositif selon l'une des revendications 1 à 5, **caractérisé en ce que** le broyeur secondaire (20) est conçu de sorte à produire des fragments fins ayant des dimensions inférieures ou égales à environ 40 millimètres à la sortie du broyeur secondaire (20).

7. Dispositif selon l'une des revendications 1 à 6, **caractérisé en ce qu'**il inclut également un extracteur à racloirs (40) en amont du broyeur principal (10).

8. Dispositif selon la revendication 7, **caractérisé en ce qu'**il inclut en outre une courroie de convoyeur (60) agencée entre l'extracteur à racloirs et le broyeur principal, le convoyeur (60) incluant au moins une raclette de nettoyage de courroie pour nettoyer la courroie du convoyeur et un moyen pour récupérer les débris détachés par la raclette de nettoyage.

9. Dispositif selon l'une des revendications 1 à 8, **caractérisé en ce qu'**il inclut en outre un séparateur dynamique (70) agencé en aval du broyeur secondaire (20).

10. Dispositif selon la revendication 9, **caractérisé en ce qu'**il inclut en outre un séparateur statique (80) agencé en aval du séparateur dynamique (70).

11. Dispositif selon l'une des revendications 9 ou 10, **caractérisé en ce qu'**il inclut en outre une vis de lavage agencée entre le broyeur secondaire (20) et le séparateur dynamique (70).

12. Méthode de traitement d'accumulateurs au plomb non broyés, **caractérisée en ce qu'**elle inclut, en combinaison :
- le broyage grossier (200) des accumulateurs au moyen d'un broyeur principal (10),
- le tamisage (300) des débris de broyage au moyen d'un tamiseur rotatif (30) agencé en aval du broyeur principal (10), le tamiseur (30) ayant une maille comprise entre 10 et 20 millimètres, de façon à séparer les débris grossiers des substances fines incluant des oxydes de plomb (PbSO₂, PbSO₄) ,
- le broyage fin (400) des débris grossiers au moyen d'un broyeur secondaire (20) agencé en aval du tamiseur (30), afin d'obtenir des fragments fins.
